Europäisches Patentamt

European Patent Office

Office européen des brevets

(19)

(11) Veröffentlichungsnummer : **0 048 947**
**B1**

(12)                    **EUROPÄISCHE PATENTSCHRIFT**

(45) Veröffentlichungstag der Patentschrift :
04.07.84

(21) Anmeldenummer : 81107550.6

(22) Anmeldetag : 23.09.81

(51) Int. Cl.³ : **C 04 B 43/00, F 16 L 59/04**

(54) **Klebfähige Isolierplatte.**

(30) Priorität : 26.09.80 DE 3036422

(43) Veröffentlichungstag der Anmeldung :
07.04.82 Patentblatt 82/14

(45) Bekanntmachung des Hinweises auf die Patenterteilung : 04.07.84 Patentblatt 84/27

(84) Benannte Vertragsstaaten :
BE DE FR GB IT

(56) Entgegenhaltungen :
EP-A- 0 002 487
EP-A- 0 027 264
DE-A- 2 748 307

(73) Patentinhaber : WACKER-CHEMIE GMBH
Prinzregentenstrasse 22
D-8000 München 22 (DE)

(72) Erfinder : Kalmuk, Hans-Peter
Hintere Rottach 48
D-8960 Kempten (DE)
Erfinder : Katzer, Hans, Dr. Dipl.-Chem.
Anwanden 11
D-8960 Kempten (DE)
Erfinder : Kratel, Günter, Dr. Dipl.-Chem.
Alpenblickstrasse 10
D-8961 Durach-Bechen (DE)

## Beschreibung

Die Erfindung betrifft eine klebfähige Isolierplatte auf Basis von anorganischem, hochdispersem Wärmedämmaterial und Härter.

Solche klebfähige Isolierplatten sind an sich bekannt. Beispiele hierfür sind Wärmedämmplatten mit Glasfaserumhüllung oder klebfähigen Folienüberzügen. Derartige Platten besitzen zumeist gut Wärmeisolierungseigenschaften — sie sind jedoch für viele Anwendungen nicht ausreichend temperaturstabil.

Als hochtemperaturbeständige, klebfähige Isolierplatten sind weiterhin Keramikplatten bekannt, die jedoch nachteiligerweise geringe Wärmeisolierungseigenschaften aufweisen.

Grundsätzlich zeigen Isolierplatten, die ohne Bindemittel aus anorganischem hochdispersem Wärmedämmstoff gepreßt werden, die entsprechend der Qualität des Wärmedämmaterials besten Wärmeisolierungseigenschaften. Derartige Platten sind jedoch, gemessen an den praxisüblichen Anforderungen, als nicht klebfähig zu bezeichnen, da die Klebstellen selbst bei geringer mechanischer Belastung bereits abkreiden.

Weiterhin sind auch bereits Formkörper, einschließlich Platten, auf Basis von anorganischem, hochdispersem Wärmedämmaterial und in der Masse homogen verteiltem Härter bekanntgeworden. Um jedoch solche Formkörper mit klebfähiger Oberfläche auszustatten, müßten derart hohe Härtermengen zugemischt werden, daß die Wärmedämmeigenschaften aufgrund der erhöhten Festkörperleitfähigkeit auf ein nicht mehr akzeptables Maß absinken würden.

In DE-A 27 48 307 ist eine Isolierplatte beschrieben, die dadurch erhalten wird, daß auf eine bindemittelfreie Schicht aus hochdisperser Kieselsäure, Trübungsmittel und ggf. Mineralfasern eine aus Mineralfasern, Füllstoffen und Kaliwasserglas als Härter bestehende Schicht aufgebracht und mit ihr verpreßt wird. Diese gehärtete Schicht weist eine glasartige Struktur auf und besitzt daher lediglich geringe Isoliereigenschaften. Nachdem andererseits die zwischen den beiden Schichten entstehende Trennfuge temperaturempfindlich ist, müssen relativ große Konstruktionshöhen in Kauf genommen werden. Darüberhinaus greift Kaliumsilikat die oxidische Schutzschicht von Heizdrähten an. Dadurch werden die Standzeiten von Heizwicklungen in nicht mehr hinzunehmender Weise vermindert.

Ferner wird gemäß der älteren Europäischen Patentanmeldung 80 106 147-4 (EP-A-27 264) ein Wärmeisolierkörper vorgeschlagen auf Basis von hochdispersem Isoliermaterial, Trübungsmittel und Bindemittel, wobei als Bindemittel typischerweise Soda, Natriumsulfat, niederschmelzende Gläser und dergleichen eingesetzt werden. Diese Bindemittel greifen jedoch nachteiligerweise, wie bereits oben beschrieben, Heizwicklungen an, so daß die vorgeschlagenen Wärmeisolierkörper als Träger für Heizdrähte nicht eingesetzt werden können. Darüberhinaus beeinträchtigt das genannte Härtermaterial erheblich die Isolierwirkung.

Aufgabe der Erfindung war es, eine klebfähige Isolierplatte zu entwickeln, die den Belastungen höherer Temperaturen standhält und darüberhinaus Wärmedämmeigenschaften aufweist, die denen bindemittelfreier Wärmedämmplatten praktisch gleichkommt.

Insbesondere war es Aufgabe der Erfindung, eine Isolierplatte vorzustellen, die als Kochplatte eingesetzt werden kann, wobei

die Platte der Temperaturbelastung glühenden Drahts standhält,

der Heizdraht aufgeklebt werden kann und dabei eine mechanisch stabile Verbindung zustandekommt,

die Platte eine für die erforderliche Wärmedämmung benötigte Konstruktionshöhe aufweist, die in etwa der einer bindemittelfreien Platte entspricht.

Gelöst wird diese Aufgabe durch eine Isolierplatte mit inhomogener Härterverteilung.

Gegenstand der Erfindung ist eine klebfähige, den Belastungen höherer Temperaturen, insbesondere der Temperaturbelastung glühenden Heizdrahts, standhaltende Isolierplatte auf Basis von anorganischem, hochdispersem Wärmedämmstoff und Härter, die dadurch gekennzeichnet ist, daß

a) der Härter Borcarbid ist oder ausgewählt ist aus der Gruppe der Boride des Aluminiums, des Titans, des Zirkoniums und des Kalziums,

b) der Härter inhomogen verteilt ist, wobei der Härteranteil im oberflächennahen, als Grenzfläche für eine Verklebung dienenden Bereich der Platte, bezogen auf dessen Masse, 3 bis 15 Gew.-% und im übrigen, überwiegenden Teil der Platte 0 bis 1,5 Gew.-%, bezogen auf dessen Masse, beträgt und

c) bezogen auf den Härteranteil die 1,5- bis 10-fache Menge an Magnesiumoxid, Kalziumoxid oder Bariumoxid enthalten ist.

Als Wärmedämmaterial werden im Rahmen der Erfindung für den nicht bzw. nur schwach gehärteten, im Anspruch als « übrigen, überwiegenden » bezeichneten Teil der Platte Mischungen eingesetzt von

| | |
|---|---|
| 30 bis 100 | Gew.% feinteiligem Metalloxid, |
| 0 bis 50 | Gew.% Trübungsmittel, |
| 0 bis 20 | Gew.% Fasermaterial und |
| 0 bis 1,5 | Gew.% Härter. |

Für den oberflächennahen, als Grenzfläche für eine Verklebung dienenden Bereich der Platte werden, im Härteranteil sich gegenüber den vorstehend beschriebenen Mischungen unterscheidende Mischungen von

30 bis 97 Gew.% feinteiligem Metalloxid
0 bis 50 Gew.% Trübungsmittel
0 bis 20 Gew.% Fasermaterial und

3 bis 15 Gew.% Härter

verwendet.

Beispiele für feinteiliges Metalloxid sind pyrogen erzeugte Kieselsäuren, einschließlich Lichtbogenkieselsäuren, alkaliarme Fällungskieselsäuren, analog hergestelltes Aluminiumoxid, Titandioxid und Zirkondioxid. Die feinteiligen Metalloxide weisen spezifische Oberflächen von 50 bis 700 m²/g, vorzugsweise 70 bis 400 m²/g, auf.

Als Trübungsmittel kommen Ilmenit, Titandioxid, Siliciumcarbid, Eisen-II-Eisen-III-Mischoxid, Chromdioxid, Zirkonoxid, Mangandioxid, sowie Eisenoxid in Betracht. Die Trübungsmittel weisen vorteilhafterweise ein Absorptionsmaximum in Infrarotbereich zwischen 1,5 und 10 µm auf.

Beispiele für Fasermaterial sind Glaswolle, Steinwolle, Schlackenwolle, keramische Fasern, wie sie aus Schmelzen von Aluminiumoxid und/oder Siliciumoxid gewonnen werden, Asbestfasern und andere.

Als Härter werden die Boride des Aluminiums, des Titans, des Zirkoniums und des Kalziums, insbesondere jedoch Borcarbid eingesetzt.

Zusätzlich werden basische Oxide, insbesondere Magnesiumoxid, Kalziumoxid oder Bariumoxid, in Mengen vom 1,5- bis 10-fachen des jeweiligen Härtergehalts eingesetzt.

Die Mischungen werden durch einfaches Vermischen der Komponenten in der gewünschten Zusammensetzung gewonnen. Es können jedoch auch sogenannte agglomerierte Mischungen, insbesondere auf Basis pyrogen erzeugter Kieselsäure eingesetzt werden. Hierbei wird in der Weise verfahren, daß das Trübungsmittel bereits beim Herstellungsprozeß der Kieselsäure, bei dem die Kieselsäure noch in Form der Primärteilchen vorliegt, kontinuierlich im angestrebten Mischungsverhältnis zugesetzt wird.

Die Herstellung der erfindungsgemäßen Isolierplatte erfolgt durch Verdichten und Verpressen von zumindest zwei, sich zumindest im Härteranteil unterscheidenden Mischungen.

Ein bevorzugtes Herstellungsverfahren ist gekennzeichnet durch die folgenden Verfahrensschritte :

a) Vorverdichten der härterfreien bzw. härterarmen Wärmedämmmischung bei Drücken von 0,098 bis 0,49 MPa, vorzugsweise etwa 0,2 MPa

b) Aufbringen der härterreichen Mischung

c) Verpressen der Mischungen zur Platte bei Enddrücken von 0,098-1,47 MPa

d) Erhitzen der verpreßten Platte auf Temperaturen von 500 bis 800 °C.

Beim Verdichten bzw. Verpressen der Mischungen sollen die darin eingeschlossenen Gase entweichen können. Daher erfolgt das Verdichten und Verpressen vorzugsweise unter Anlegen von Unterdruck. Das Entgasen kann auch schon vor dem Verdichten bzw. Verpressen erfolgen oder beginnen.

Die Dicke der härterreichen, oberflächennahen, als Grenzfläche für eine Verklebung dienende Schicht beträgt bis zu 5 mm, zumeist jedoch etwa 1 mm. Die untere Grenze liegt naturgemäß in der Korngröße des Materials. Erfindungsgemäße Isolierplatten mit besonders dünner härterreicher Schicht können beispielsweise dadurch hergestellt werden, daß das vorverdichtete, härterfreie bzw. härterarme Plattengrundmaterial mit der härterreichen Mischung lediglich bestäubt und anschließend verpreßt wird.

Oftmals ist es zweckmäßig, Einprägungen an den Isolierplatten vorzunehmen, beispielsweise zum Aufnehmen von Heizspiralen. Zur Erzeugung einer gleichmäßig dicken härterreichen Schicht ist es dabei oftmals zweckmäßig, eine gleiche Einprägung bereits am vorverdichteten Grundmaterial vorzunehmen. Derartige Einprägungen werden zweckmäßigerweise durch Einsatz eines, entsprechende Ausprägungen aufweisenden Preßstempels zum Verdichten bzw. Verpressen des Wärmedämmaterials erzeugt.

Die erfindungsgemäßen Isolierplatten sind klebfähig. Als Kleber können handelsübliche, hochtemperaturfeste Kleber auf Basis von Wasserglas oder auf Phosphatbasis eingesetzt werden. Derartige Kleber werden üblicherweise als keramische Kleber bezeichnet.

Die erfindungsgemäßen Isolierplatten können mit Metallen, Keramik, Glasfasern, Steinwolle und anderen Materialien verklebt werden. Für Hochtemperaturanwendungen können die Platten weiterhin mit einem Aluminiumsilikatfaserüberzug ausgerüstet werden. Dies kann beispielsweise dadurch geschehen, daß ein Gewebe oder ein Filz aus dem genannte Material aufgeklebt wird.

Sie können beispielsweise als Ofenverkleidung oder als Kochplatten mit aufgeklebter Heizspirale eingesetzt werden. Vorteilhaft ist insbesondere die leichte Montage von Heizspiralen, die durch einfaches Aufkleben erfolgen kann. Hervorzuheben ist weiterhin die gute Maßhaltigkeit der Platten. Da die erfindungsgemäßen Platten ohne Schwierigkeiten mit scharfen Kanten ausgeformt werden können, ist eine fugentreue Montage gewährleistet.

Die erfindungsgemäßen klebfähigen Isolierplatten weisen Wärmedämmeigenschaften auf, die denen bindemittelfreier Wärmedämmplatten nahezu gleichkommen. Entsprechend genügen für die erfindungsgemäßen Isolierplatten Konstruktionshöhen, wie sie sonst nur bei bindemittelfreien Platten möglich sind — sie unterscheiden sich jedoch durch ihre wesentlich erhöhte mechanische Belastbarkeit und insbesondere durch ihre Klebfähigkeit.

Beispiel

Es wird eine Platte von 18 cm Durchmesser und einer Dicke von 1,5 cm hergestellt.
Eine Mischung von

89,4 g pyrogen erzeugter Kieselsäure,
52,2 g Ilmenit,
8,4 g Aluminiumsilikatfaser

werden bei 0,196 MPa Druck vorverdichtet.
Anschließend werden 13 g einer Mischung von

6,0 g pyrogen erzeugter Kieselsäure,
3,5 g Ilmenit,
2,0 g Aluminiumsilikatfaser,
0,5 g B₄C,
1 g Magnesiumoxid

auf die vorverdichtete Platte in gleichmäßiger Schicht aufgetragen.

Schließlich wird bei einem Druck von 1,18 MPa auf eine Konstruktionshöhe von 1,5 cm zusammengepreßt.

Der Preßstempel weist eine derartige Ausprägung auf, daß in die Platte ein Spiralengang eingedrückt wurde.

Die Platte wird nun eine Stunde lang bei 750 °C getempert, wobei die oberste Schicht aushärtet.

Es wird eine Heizspirale mit einem Keramikkleber auf Basis von Wasserglas (Handelsname Resitect 160 K, Firma Didier) aufgeklebt.

Nach einem 30-stündigen Dauertest unter den Betriebsbedingungen einer Kochplatte ist die klebende Verbindung zwischen Isolierplatte und Heizspirale noch ohne Beeinträchtigung gegeben.

## Ansprüche

1. Klebfähige, den Belastungen höherer Temperaturen, insbesondere der Temperaturbelastung glühenden Heizdrahts standhaltende Isolierplatte auf Basis von anorganischem, hochdispersem Wärmedämmstoff und Härter, dadurch gekennzeichnet, daß

a) der Härter Borcarbid ist oder ausgewählt ist aus der Gruppe der Boride des Aluminiums, des Titans, des Zirkoniums und des Kalziums,

b) der Härter inhomogen verteilt ist, wobei der Härteranteil im oberflächennahen, als Grenzfläche für eine Verklebung dienenden Bereich der Platte, bezogen auf dessen Masse, 3 bis 15 Gew.-% und im übrigen, überwiegenden Teil der Platte 0 bis 1,5 Gew.-%, bezogen auf dessen Masse, beträgt und

c) bezogen auf den Härteranteil die 1,5- bis 10-fache Menge an Magnesiumoxid, Kalziumoxid oder Bariumoxid enthalten ist.

2. Isolierplatte nach Anspruch 1, dadurch gekennzeichnet, daß die Platte eine aufgeklebte Heizspirale aufweist.

3. Isolierplatte nach Anspruch 1 und 2, dadurch gekennzeichnet, daß die Platte eine aufgeklebte Schicht aus Aluminiumsilikatfaser aufweist.

## Claims

1. Insulating plates that are capable of being glued, are resistant to the stress of relatively high temperatures, especially the temperature stress of red-hot heating elements, and are based on an inorganic, highly disperse heat-insulating material and a hardener, characterised in that

a) the hardener is boron carbide or is selected from the group consisting of the borides of aluminium, titanium, zirconium and calcium,

b) the hardener is distributed inhomogeneously, the amount of hardener in the region of the plate near the surface serving as contact surface for adhesion being from 3 to 15 % by weight, based on the composition of that region, and, in the remaining, major part of the plate, being from 0 to 1.5 % by weight, based on the composition of that part, and

c) from 1.5 to 10 times, based on the amount of hardener, of magnesium oxide, calcium oxide or barium oxide is present.

2. Insulating plate according to claim 1, characterised in that the plate is provided with a heating coil bonded thereto.

3. Insulating plate according to claims 1 and 2, characterised in that the plate is provided with a layer comprising aluminium silicate fibres bonded thereto.

## Revendications

1. Plaque isolante collable, résistant aux charges de hautes températures, en particulier à la charge de température d'un fil de chauffage porté au rouge, à base d'une matière thermiquement isolante minérale, fortement dispersée, et d'un durcisseur, plaque caractérisée en ce que :

a) le durcisseur est du carbure de bore ou est choisi dans l'ensemble constitué par les borures de l'aluminium, du titane, du zirconium et du calcium,

b) le durcisseur est réparti de façon non homogène, la proportion de durcisseur dans la région de la plaque proche de la surface, servant de surface de séparation pour un collage, étant, par rapport à la masse, de 3 à 15 % en poids et dans la partie restante, prépondérante, de la plaque de 0 à 1,5 % en poids, par rapport à sa masse, et

c) par rapport à la proportion de durcisseur, une quantité 1,5 à 10 fois plus élevée d'oxyde de magnésium, d'oxyde de calcium ou d'oxyde de baryum est contenue.

2. Plaque isolante suivant la revendication 1, caractérisée en ce que la plaque présente une spirale de chauffage collée.

3. Plaque isolante suivant l'une des revendications 1 et 2, caractérisée en ce que la plaque présente une couche collée de fibres de silicate d'aluminium.